# EUROPEAN PATENT SPECIFICATION

(11) **EP 2 396 561 B1**
(45) Date of publication and mention of the grant of the patent: **20.08.2014**
(21) Application number: 09840126.8
(22) Date of filing: 16.02.2009
(51) Int. Cl.: F16B 33/02, F16B 25/00, B21H 3/06, F16B 25/04

(54) **SELF-TAPPING THREAD FORMING SCREW AND CORRESPONDING THREAD ROLL DIE**
GEWINDESCHNEIDSCHRAUBE UND ENTSPRECHENDE GEWINDEWALZBACKE
VIS FORMANT DES FILETS À AUTO-FILETAGE AUTONOME ET MATRICE À ROULEAUX CORRESPONDANTE

(43) Date of publication of application: 21.12.2011
(73) Proprietor: Unisteel Technology International Limited, 87000 Labuan F.T. (MY)
(72) Inventor: KARUPAYA, Balasingam, Negeri Sembilan 70300 (MY)
(74) Representative: Harris, Ian Richard
(86) International application number: PCT/SG2009/000047
(87) International publication number: WO 2010/093329

(56) References cited:
- WO-A1-2008/156425
- DE-A1- 2 912 924
- DE-A1- 10 308 130
- GB-A- 772 810
- US-A- 4 527 932
- US-A- 4 854 311
- US-A- 5 505 736
- US-A- 5 735 658
- US-A- 5 800 107

## Description

### FIELD OF THE INVENTION

This invention relates to a thread forming screw thread fastener for forming an internal thread in a work piece material such as synthetic plastics, resins and the like and corresponding thread roll die to manufacture the thread of the screw.

### BACKGROUND OF THE INVENTION

Conventional screws often damage the material of the work piece, in particular when the material of the work piece is a synthetic plastic, resin and the like. Relatively high driving torques are typically required to fasten the screw in the work piece, which contribute to the likelihood of damaging the material of the work piece when the screw is fastened to the work piece. The screw may also strip-off, burst, become stuck in the material, and/or stress cracks may form in the work piece material. This damage to the work piece material and screw weakens the integrity of the joints formed between the work piece material and the screw.

Attempts have been made to improve screw thread design. However as mentioned, conventional screw threads do not adequately meet critical functional requirements, and the strength and integrity of the joints has been compromised. For example, some previous threads that have been disclosed include, United States Patent Number 4,527,932, United States Patent Number 5,544,993, United States Patent Number 6,672,813, and United States Patent Number 5,061,135. These previous screw thread designs have been employed in a few applications on work piece materials as attempts to provide sure insertion of the screw into the work piece. However, optimum results have not been achieved with conventional screw thread designs in areas such as the positive engagement, failure torque, torsional strength and the like. In particular, the assembly efficiency and flexibility of the screw into the work piece of conventional screw thread designs are not easily applied in product miniaturization applications where the design solution is hampered by weak integrity of joints of the screw thread formed with the work piece material.

US5,735,658 discloses a tool having a profile for the forming or shaping of a complementary thread in and/or on a fastener. The thread which is formed by the profile of the tool has two flanks each having a first section adjacent the crest and a second section adjacent the root of the thread. The second sections jointly include or consist of at least four concave portions having different radii of curvature and gradually merging into each other. The first sections make angles of less than 40 DEG with a plane which is normal to the longitudinal axis of the thread. The first and second sections of each flank are separated from each other by an imaginary cylinder having a diameter which matches the pitch diameter of the thread and a longitudinal axis which coincides with or is at least close to the longitudinal axis of the thread.

A thread forming screw thread and corresponding thread roll that alleviates the problems and drawbacks associated with the prior art is needed.

### SUMMARY

An aspect of the invention is a self-tapping thread forming screw thread fastener as defined in Claim 1.

The surface of the threads, thread crest, thread root and thread flanks are arranged to deform the ductile material without cracking or damaging the surrounding material of the work piece. The threads are arranged to deform the ductile material of the work piece against the surface of the thread flank. The second and third portions of the thread flank are arranged to deform the ductile material of the work piece against the surface of the central portion of constant radius of the thread flank. The radius of the central portion of the thread flank having constant radius defines a construction circle which determines the pitch of the thread. The pitch of the thread is determined by the tangents between adjacent construction circles sharing a thread crest. The thread pitch of the fastener urges ductile material displacement towards the thread root.

An aspect of the invention is a thread roll die as defined in Claim 11.

### BRIEF DESCRIPTION OF THE DRAWINGS

In order that embodiments of the invention may be fully and more clearly understood by way of non-limitative example from the following description taken in conjunction with the accompanying drawings in which like reference numerals designate similar or corresponding elements, regions and portions, and in which:
FIG. 1A-D shows the side perspective view of the thread forming screw (FIG 1A), the cross-section of the screw taken along line A - A in FIG 1A (FIG 1B), enlarge view of the thread profile (FIG 1 C), and basic construction and geometry of the thread forming screw (FIG 1D) in accordance with an embodiment of the invention;
FIG. 2A-B shows the side view and the cross sectional view of the screw where the thread forming screw is rolled from a cylindrical header blank (FIG 2A), and the cross section of the screw taken along line A - A in FIG 2A (FIG 2B) in accordance with an embodiment of the invention;
FIG 3A-B shows the side view of the roll thread die to formed the thread (FIG 3A) and the face of the roll thread die (FIG 3B) in accordance with an embodiment of the invention;
FIG 4 shows the cross sectional view of an assembled thread forming screw fastener with engagement and material flow of the material of the work piece that the fastener is attached in accordance with an embodiment of the invention; and
FIG. 5A-B shows a cross sectional view (FIG. 5A) and a graph (FIG. 5B) of a thread forming screw fastener showing the torque and insertion depth at three points during insertion into a work piece in accordance with an embodiment of the invention.

### DETAILED DESCRIPTION

A thread forming screw thread fastener and a corresponding thread roll die for manufacture of the screw thread of the fastener are disclosed. The thread forming screw thread fastener is for fastening into a hole made by the fastener of a work piece composed of a low ductility material such as synthetic plastic, resin, glass filled nylon, polypropylene, polyphenelyne oxide, polystyrene, polyethylene, acrylonitrite butadiene styrene (ABS), polycarbonate and the like. More specifically, the thread forming screw fastener is a self-tapping thread which is able to tap an internal thread in an unthreaded work piece which may be made by, for example, die casting, molding, drilled hole and the like. The thread forming self-tapping screw has a symmetrical thread profile with a sharp transition crest and circular thread root which forms an internal thread in the work piece with low installation torque. A low installation torque is defined as the amount of torque applied to the thread forming screw configured in accordance with an embodiment of the invention during installation or engagement between the work piece and the screw, whereby the resulting in less stress cracks in the work piece, avoiding thread strip, while a higher clamp load is retained in the joint or the like. A lower installation torque may result in a lower friction that is transmitted on the work piece, whereby an effective cutting action is promoted by the specific engineered geometric design of the thread flank, while promoting efficient deformation of the work piece material during installation and having a high failure torque to enhance high clamping loads and improve joint integrity with mating parts of the plastic material of the work piece. Given an example of an embodiment of the invention, if a failure torque of the thread forming screw is 1.0Nm, the targeted installation torque is expected to be below 0.25Nm, which is may lead to an improvement of 10-15% over some attempts made with previous threads in conventional fasteners. Of course, the value of the failure torque of the thread forming screw and the targeted installation torque may depend on several factors including for example the type of material, length of engagement, boss diameter, size of screw, type of finishing of the thread forming screw and the like.

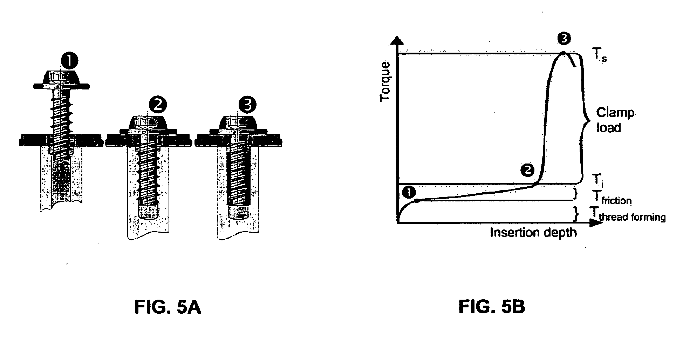

FIG. 5A-B shows a cross sectional view (FIG. 5A) and a graph (FIG. 5B) of a thread forming screw fastener showing the torque and insertion depth at three points during insertion into a work piece in accordance with an embodiment of the invention. FIG. 5A shows the torque and insertion depth in a work piece at Point 1 which is a thread forming torque, when the screw starts to be assembled. Point 2 is where the screw is further inserted and the torque increases as seen in FIG. 5B until it touches the work piece base. At this point the screw has passed through the thread friction. The total of thread forming torque plus the torque to overcome the thread friction is called installation torque (Ti). At this point it is concluded that there is no clamp load (clamping force) that is reacting in the joint. When additional torque is applied to the screw further, the tension in the joint increases and the clamp force in the joint also increase until it reaches to a point whereby the material and or screw will fail, as at Point 3. The clamp load may be increased gradually in relation to applied torque and insertion depth.

An aim in an assembly joint in accordance with an embodiment of this invention is to have a lower installation torque (Ti), and a high failure torque. A lower installation torque means a lower friction between the thread and work piece and which cause by efficient thread forming. Referring to FIG. 5A-B, the torque between point 2 to point 3 provides a clamping force in the joint, if the gap between point 2 and 3 is narrow, it means either the installation torque is high and or the failure torque in the joint is low and thus provides a lower clamping force or load. This may occur because there is an insufficient load carrying capability and which may result in loosening when subjected to shock or vibration in real time applications, which contributes to failure in assembly joints.

In an embodiment, the thread forming screw consists from a size range from 0.8mm through 3mm in size for electronic devices application and capable to be extended to a larger range based on application needs. The material of the thread forming screw is generally produce with steel, stainless steel and other materials based on application needs.

Embodiments of the invention relate to a self-tapping screw having a symmetrical thread profile with a sharp transition between the flanks and circular thread root. The screw shank is surrounded by a helically circumferential cutting-edge which projects radially from the root of the thread. The thread flank is constructed with a sharp crest, for example with 30 degree angle, which is designed to deform and or cut the base material of the work piece. The work piece may not require to be tapped and the thread root is in circular shape which connected radially from one flank to the other to promote efficient flow of the material of the work piece and encourage deformation of the work piece material towards the root of the thread. The flanks themselves are provided with a constant pitch from the root of the thread so that there is a constant thread angle between the two flank lines. It will be appreciate that the thread is feasible to be constructed with single helix and double helix with the same pitch and geometry.

Embodiments provide a universal screw which, with a relatively low installation torque, assures a highly stressable connection between the screw and material of the work piece such as plastic, even with different consistencies of the plastic. A highly stressable connection is regarded when a common self-tapping screw having a thread flank with 60 degree angle increase radial force and hoop stress which may result in work piece cracks and burst. In an embodiment of the invention, this is accomplished by having a sharp thread crest. The sharp thread crest deforms the material to form a thread and efficiently promote the flows of material towards the root with a circular core. This reduces the radial stress between the screw and plastic, which prevents premature failure such as, boss burst, cracks and stripping. The improved fastener comprises having a sharp crest with a 30-degree isosceles triangle as flank, which is half of total flank height which intersect with the basic fundamental circle that form the thread root.

Due to smooth transition from sharp thread crest of the flank and continuing towards circular root of thread, the stress and friction during installation is reduced and enhances smooth material flow of the material of the work piece that the fastener is fixed. In accordance with an aspect of the invention there is provided a corresponding thread roll die for manufacturing the said thread.

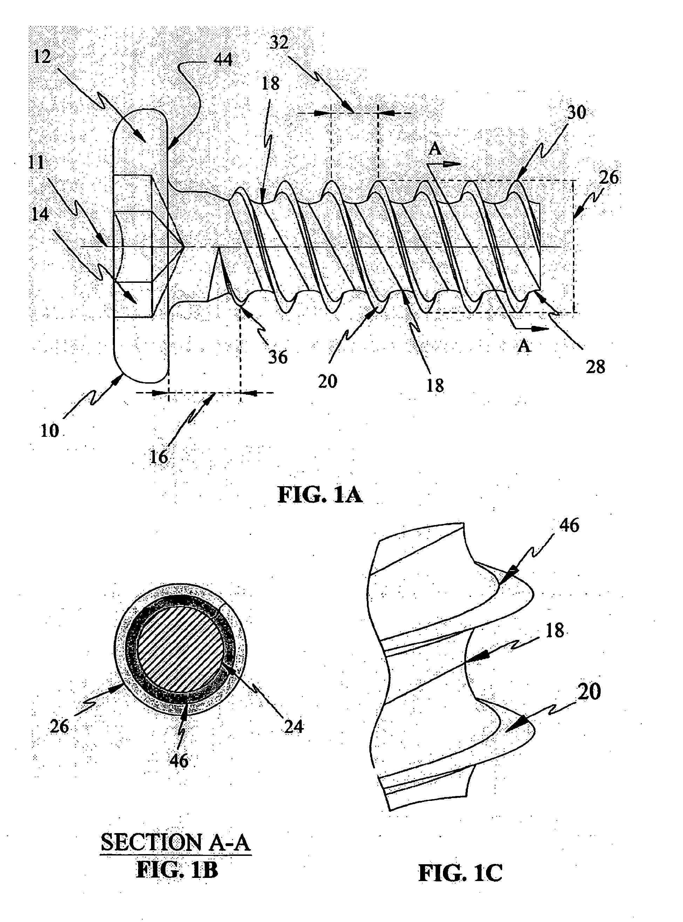

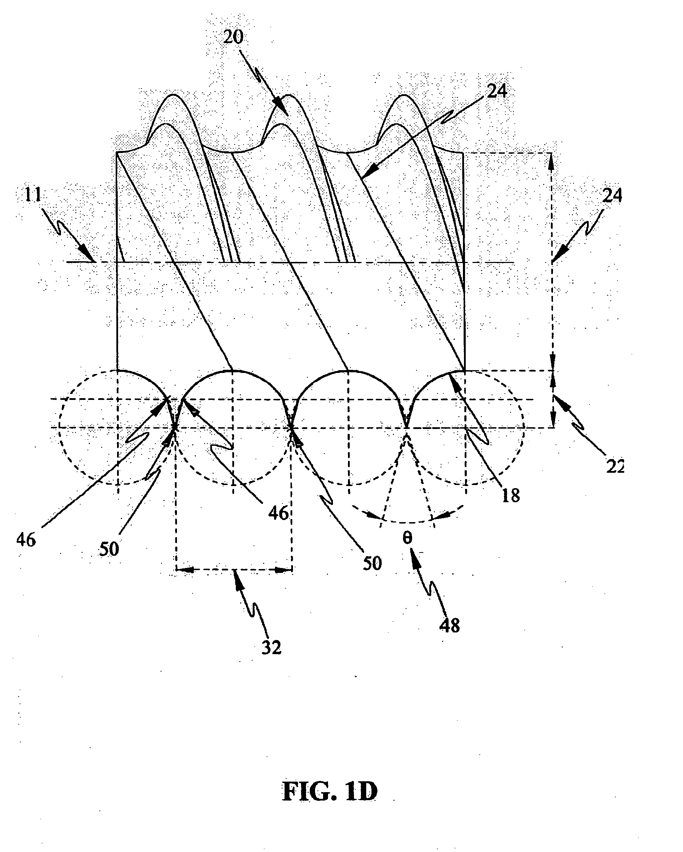

With reference to FIG. 1A-1D, a thread forming screw 10 in accordance with an embodiment of the invention as shown in FIG 1A-1D. In FIG 1A, a thread forming screw is shown having a symmetrical thread profile around the central axis 11 with a constant radius transition from intersection 46 and to the root of the thread 18. In FIG. 1A the profile of the screw thread is shown, where the profile is the cross section taken along the longitudinal central axis 11 of the screw. The flanks 20 of the thread are developed from the intersections with two circles points 46 and meet the common point 50 that makes, for example in one embodiment, an isosceles triangle of 30 degrees 48 as shown in FIG 1D. The flanks 20, threads root radius 18 and pitch 32 are constant throughout the threads. However the lead thread 30 and the thread end 28 can be manufactured with various shapes based on application needs. The fastener has a head 12 having a drive to be engaged with a driver bit.

Embodiments have a thread forming screw thread which has a capability of cutting and deforming a low ductility material such as synthetic plastic, resin, glass filled nylon, polypropylene, polyphenelyne oxide, polystyrene, polyethylene, acrylonitrite butadiene styrene (ABS), polycarbonate and the like. The sharp thread flank 20 with 30-degree angle 48 promotes cutting action, which will split through the plastic material and accommodate it to flow easily in the circular valley of the threads and flow out over to the root 18. This minimizes radial stress in the pilot hole and or boss and eliminates stress cracks. The cross sectional configuration of the thread major diameter 26 and minor diameter 24 is cylindrical in shape.

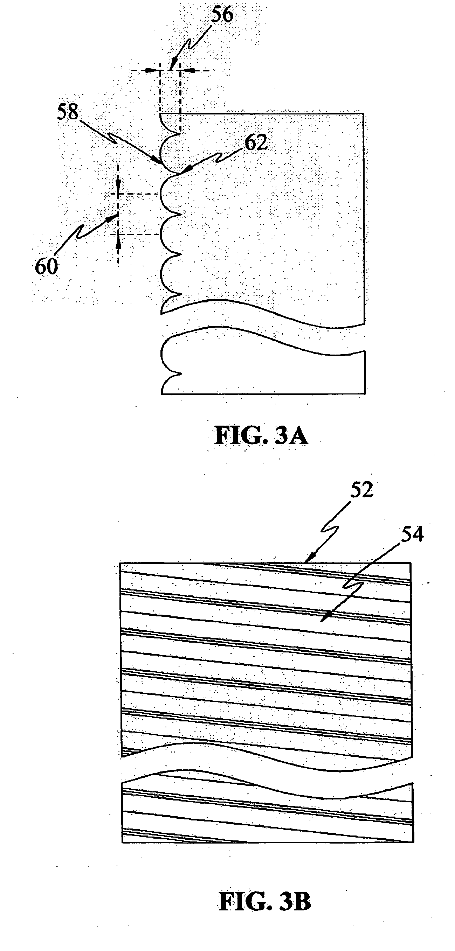

In another aspect of the invention, a thread roll die 52 is shown for manufacturing the thread forming screw, the thread roll die 52 is comprises the mirror image profile of the thread forming screw with thread depth 56, thread root radius 58, die face 54, thread pitch 60 and thread crest 62. Embodiments of a screw thread, namely thread forming screw for plastic in accordance with the invention are disclosed. In addition, corresponding roll thread die as shown in FIG 3A-B to manufacture the thread are disclosed.

The thread forming screw is to have a high torsional strength, efficient thread forming capabilities, which eliminates tapping process, lower thread forming torque, high failure and or stripping torque, improve assembly efficiency, reduce hoop stress and reusable with multiple assemblies. The physical characteristic of the present invention also attributes to a reliable joint, which provides comfortable margin between the assembly and failure torques. This wide torque range assures that all screws are fully tightened eliminating the possibility of stripped assemblies. The thread forming screw is engineered primarily for engineering plastics application, miniaturizations compatibility with smaller diameter and length as well feasibility to manufacture with lower cost. The material of the thread forming screw is generally produced with steel, stainless steel, and other materials which may be chosen based on application needs.

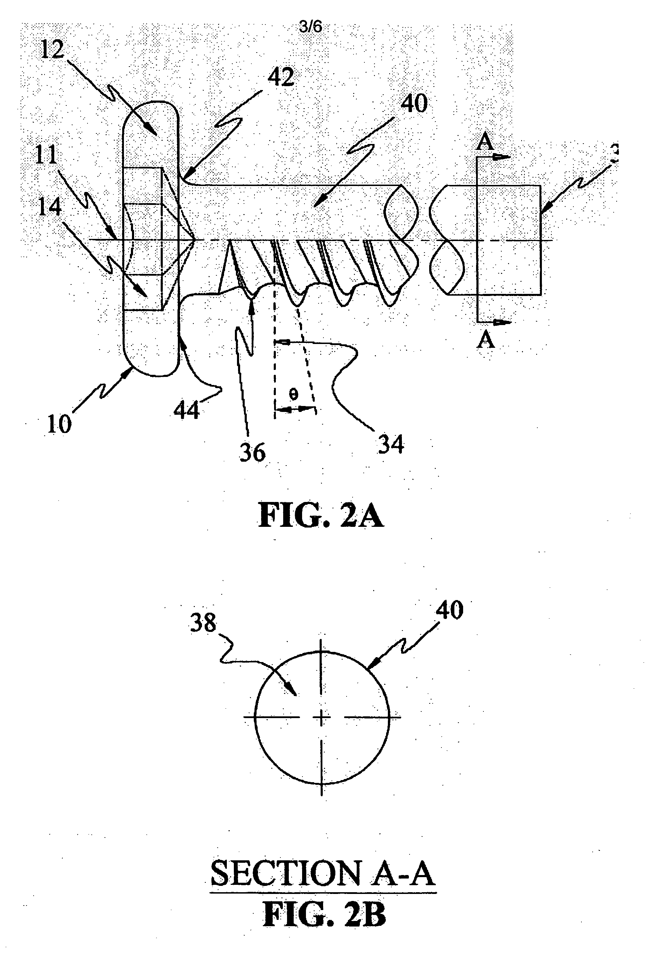

In the embodiment the thread forming screw 10 in FIG 1A - D and FIG 2A - B, having a head 12, recess 14, flat in head shape and can be extended to various shapes such as circular, countersunk, oval and the like. The thread forming screw 10 can be formed from any suitable material, such as steel, stainless steel and the like, having appropriate requisite properties and is rolled form a cylindrical cold formed blank 40 with variable diameter and length based on requirements. The thread is extended from the bearing surface 44 of the head 12 and towards the thread end 28, and is the total length of the screw. The thread length of the thread forming screw may be in the range of, for example, 2mm and above based on sizes and application needs. The top region, from bearing surface 44 to the first complete thread 36 is the thread run-out 16. The bottom region, thread end 28 is the lead thread, the thread end 28 is not limited to as flat surface as shown but also able to manufactured with variable shapes such as tapered, round, sharp, dog point and others as per intended application. The central is the full formed threads, with sharp flank 20, circular thread root 18, major diameter 26, minor diameter 24, thread pitch 32 and thread height 22. The cross section configuration of the thread forming screw is cylindrical, this allow the mating part with an engagement by a full circumferences engagement enable to achieve strong contact in the mating members, which prevents vibration loosening, high pull out force, high failure torque, thread stripping and ability in multiple usage.

The thread forming screw thread according to the invention has a sharp flank 20 which formed isosceles triangle of 30 degree angle 48, connected to intersection point 46 of basic construction circle and the concavity from intersection point 46 is continuous since it is formed by the basic root radius 18 having constant radii and whose centers are disposed in the same planes. The sharp thread flank 20 is able to cut the plastic material and the like 64 efficiently without any cracks, with low torque transmission during installation and maximize material engagements in the mating parts and this extended with a circular thread root radius 18 which allows smooth displacement flow of material 66 towards the root without any interruption. In this manner, the fastener has a shank with threads having a symmetrical thread profile with a minor diameter and a major diameter. The major diameter of the thread defines a thread crest of the screw thread, and the minor diameter of the thread define the thread root of the screw thread. The profile of the screw thread is defined by the surface of the screw thread between adjacent thread crests forming a thread flank. The thread flank has a first central portion of constant radius along the thread root. The constant radius is defined as the resulting circle shown in FIG. 1D formed by the surface of the profile of the central region portion of the thread flank. The radius of the same circle formed by the central region portion of the thread flank is also common at the two corresponding thread crests. The two corresponding thread crests formed adjacent to and on either side of the central constant radii surface of the central portion of the flank share the same radius. Two transition intersection points 46 are provided that defines a second and third portion, respectively, of the surface of the thread flank that provides a thread profile of the thread flank forming a sharp portion of the flank having a second and third portion defined by surfaces having different radii of curvature between each transition intersection point 46 and each adjacent thread crest 50. The concavity from one transition intersections points to the other transition intersection point through root 18 is continuous since it is formed by arcs of the basic construction circles 46 having constant radii and whose centers 76 are disposed in same planes. The thread crest 20 is also shares the same radii and disposed on the same plane as the central flank portion of constant radius. The smooth radius crest 20, flank 44 is able to deform the ductile material of the work piece, boss, plate or the like efficiently without any or minimizing cracks, minimal debris, low friction during installation and a maximum engagement of flank 44 in the mating parts. The wide spaced thread pitch 32 determined by the design of the screw of constant radius thread flank, in comparison with conventional screw threads that do not have configuration of thread flank of constant radius, allows maximum material displacement towards the thread root 18 without any interruption or damage to the internal structure of the ductile material of the work piece, boss, plate or the like.

Embodiments of the invention relate to a thread forming screw 10 as shown in FIG. 1A-D. In FIG. 1A, a thread forming screw is shown having a symmetrical thread profile around a central axis 11 with a constant radius transition in central flank portion between the transition intersection points 46 and including the root point 18 of the thread. The central flank portion of the thread are developed with a constant construction circle 46. The pitch of the thread 32 may be determined by the tangent 78 between each of the adjacent construction circles proximate, on either side, or sharing a common or same thread crest 20. The construction circles 46 are shown in FIG. 1D. The root radius 18 is constant and continuous since the same arc of the basic circles 46 forms the root radius. The region between each transition intersection point and corresponding crest point, the radius is different than that of the construction circle. However, it will be appreciated that the lead thread 30 and the thread end 28 can be manufactured with tapered end, rounded, dog point, and/or sharp point based and the like on application needs.

An embodiment of the invention is an improved thread forming screw, which has a capability of deforming low ductile material such as magnesium, soft aluminum, thermoset plastics and other low ductility materials. The smooth radius flank 44 from the crest 20 steadily increases towards the roots, which accommodate the material to deform easily in the valleys of the threads and flow out over to the root 18. Crack formation, boss burst and chipping are avoided and thus providing a positive and optimum flank engagement 56 in the joint. The cross sectional configuration of the thread major diameter 26 and minor or root diameter 24 is cylindrical in shape.

FIG 3A - B show the thread forming screw roll thread die 52 is disclose for manufacturing the thread, the thread roll die 52 is comprises of the same profile of the thread forming with thread die depth 56, thread root radius 58, die face 54, thread pitch 60 and thread crest 62.

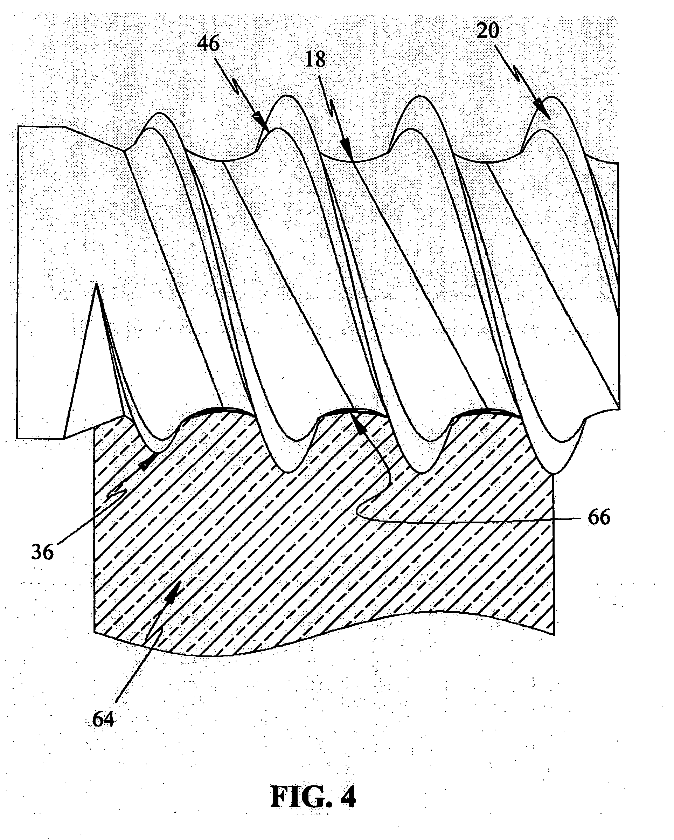

FIG 4A, show the cross sectional view of an assembled thread forming screw in plastic material and the like 64 which intended. Embodiments of the thread forming screw is specifically designed to eliminate tapping operation and forming strong thread by perfect material engagement of thread flank 20 and deformation of material towards the thread root 18 for a strong joint reliability.

It will be appreciated that embodiments of the invention may be configured as double helix threads for fast insertions into work pieces, however, for sake of clarity and to clearly explain embodiments of the invention have been described with respect to single threads.

Thus, a self-tapping thread forming screw thread fastener and a corresponding thread roll die are disclosed for fastening into a hole of a work piece composed of a material such as synthetic plastic, resin and the like. More specifically, the thread forming screw fastener is a self-tapping screw having a symmetrical thread profile with a sharp transition flank and circular thread root which forms an internal thread in the work piece with low torque while promoting efficient deformation of the work piece material during installation and having a high failure torque to enhance high clamping loads and improve joint integrity with mating parts of the low ductile material of the work piece.

While embodiments of the invention have been described and illustrated, it will be understood by those skilled in the technology concerned that many variations or modifications in details of design or construction may be made without departing from the scope of the present invention as defined by the appended claims.

## Claims

1. A thread forming screw thread fastener (10) for fastening into a hole formed by the fastener in a work piece, the fastener comprising: a head (12) having a drive to be engaged with a driver bit; and a shank with threads having a symmetrical thread profile with a minor diameter and a major diameter, the major diameter defining a thread crest of the screw thread, and the minor diameter defining the thread root of the screw thread, the profile of the screw thread defined by the surface of the screw thread between adjacent thread crests forming a thread flank (20), the thread flank having a first central portion of constant radius along the thread root, the radius common at the thread root, at each adjacent thread crests, and at two transition intersection points, the profile of the thread flank having a second and third portion defined by straight edges formed between each transition intersection point and each adjacent thread crest, wherein a sharp crest is formed at the thread crest having a 30 degree angle (48), and the height of the second and third portions of the thread flank is half of the total height of the thread flank.

2. The fastener of claim 1, wherein the surface of the threads, thread crest, thread root and thread flanks are arranged to deform the ductile material without cracking or damaging the surrounding ductile material of the work piece.

3. The fastener of claim 2, wherein the threads are arranged to deform the material of the work piece against the surface of the thread flank.

4. The fastener of any one of the preceding claims, wherein the second and third portions of the thread flank are arranged to deform the ductile material of the work piece against the surface of the central portion of constant radius of the thread flank.

5. The fastener of any one of the preceding claims, wherein the radius of the central portion of the thread flank having constant radius defines a construction circle which determines the pitch of the thread.

6. The fastener of claim 5, wherein the pitch of the thread is determined by the tangents between adjacent construction circles sharing a thread crest.

7. The fastener of any one of the preceding claims, wherein the thread pitch of the fastener urges ductile material displacement towards the thread root.

8. The fastener of any one of the preceding claims, wherein the material of the work piece is synthetic plastic.

9. The fastener of any one of the preceding claims, wherein the material of the work piece is resin.

10. The fastener of any one of the preceding claims, wherein the material of the fastener is steel or stainless steel.

11. A thread roll die for manufacturing a thread forming screw thread fastener for fastening into a hole formed by the fastener in a work piece composed of ductile material, the fastener being the fastener of any one of the preceding claims, wherein the thread roll die comprises a die face having the same profile as the thread forming screw.

## Patentansprüche

1. Gewindeformendes Gewindeschraubenbefestigungsmittel (10) zum Befestigen in einem Loch, das von dem Befestigungsmittel in einem Werkstück geformt wird, wobei das Befestigungsmittel Folgendes umfasst:
einen Kopf (12) mit einem Antrieb, der mit einem Bohrer in Eingriff zu bringen ist; und
einen Schaft mit Gewinden, die ein symmetrisches Gewindeprofil mit einem kleineren Durchmesser und einem größeren Durchmesser aufweisen,
wobei der größere Durchmesser eine Gewindespitze des Schraubengewindes definiert, und
wobei der kleinere Durchmesser die Gewindespindel des Schraubengewindes definiert, wobei das Profil des Schraubengewindes von der Oberfläche des Schraubengewindes zwischen benachbarten Gewindespitzen definiert wird, die eine Gewindeflanke (20) formen, wobei die Gewindeflanke einen ersten zentralen Abschnitt von konstantem Radius entlang der Gewindespindel aufweist, wobei der Radius an der Gewindespindel, an jeder benachbarten Gewindespitze und an zwei Übergangsschnittpunkten ein gemeinsamer ist, wobei das Profil der Gewindeflanke einen zweiten und einen dritten Abschnitt aufweist, das von geraden Rändern definiert wird, die zwischen jedem Übergangsschnittpunkt und jeder benachbarten Gewindespitze geformt sind,
wobei eine scharfe Spitze an der Gewindespitze mit einem 30-Grad-Winkel (48) geformt ist und die Höhe des zweiten und des dritten Abschnitts der Gewindeflanke die Hälfte der Gesamthöhe der Gewindeflanke beträgt.

2. Befestigungsmittel nach Anspruch 1, wobei die Oberfläche der Gewinde, der Gewindespitze, der Gewindespindel und der Gewindeflanken angeordnet ist, um das formfähige Material ohne Brechen oder Beschädigen des umgebenden formfähigen Materials des Werkstücks zu verformen.

3. Befestigungsmittel nach Anspruch 2, wobei die Gewinde zum Verformen des Materials des Werkstücks an der Oberfläche der Gewindeflanke angeordnet sind.

4. Befestigungsmittel nach einem der vorherigen Ansprüche, wobei der zweite und der dritte Abschnitt der Gewindeflanke angeordnet sind, um das formfähige Material des Werkstücks an der Oberfläche des zentralen Abschnitts des konstanten Radius der Gewindeflanke zu verformen.

5. Befestigungsmittel nach einem der vorherigen Ansprüche, wobei der Radius des zentralen Abschnitts der Gewindeflanke mit konstantem Radius einen Konstruktionszyklus definiert, der die Steigung des Gewindes festlegt.

6. Befestigungsmittel nach Anspruch 5, wobei die Steigung des Gewindes von den Tangenten festgelegt wird, die zwischen benachbarten Konstruktionszyklen mit einer gemeinsamen Gewindespitze verlaufen.

7. Befestigungsmittel nach einem der vorherigen Ansprüche, wobei die Gewindespitze des Befestigungsmittels die Verschiebung des formfähigen Materials zu der Gewindespindel bewirkt.

8. Befestigungsmittel nach einem der vorherigen Ansprüche, wobei das Material des Werkstücks synthetischer Kunststoff ist.

9. Befestigungsmittel nach einem der vorherigen Ansprüche, wobei das Material des Werkstücks Harz ist.

10. Befestigungsmittel nach einem der vorherigen Ansprüche, wobei das Material des Werkstücks Stahl oder Edelstahl ist.

11. Gewindewalzform zum Herstellen eines gewindeformenden Schraubengewinde-Befestigungsmittels zum Befestigen in einem Loch, das von dem Befestigungsmittel in einem Werkstück geformt wird, das aus formfähigem Material besteht, wobei das Befestigungsmittel das Befestigungsmittel nach einem der vorherigen Ansprüche ist, wobei die Gewindewalzform eine Formseite umfasst, die das gleiche Profil wie die Gewindeformschraube umfasst.

## Revendications

1. Attache à filet de vis formant des filets (10) destinée à être fixée dans un trou formé par l'attache dans une pièce, l'attache comprenant :
une tête (12) ayant un entraînement devant être amené en prise avec un embout de tournevis ; et une tige avec des filets ayant un profil de filet symétrique avec un diamètre mineur et un diamètre majeur, le diamètre majeur définissant une crête de filet du filet de vis, et le diamètre mineur définissant la base de filet du filet de vis, le profil du filet de vis étant défini par la surface du filet de vis entre des crêtes de filet adjacentes formant un flanc de filet (20), le flanc de filet ayant une première portion centrale de rayon constant le long de la base de filet, le rayon étant commun à la base de filet, à chaque crête de filet adjacente, et à deux points d'intersection de transition, le profil du flanc de filet ayant une deuxième et une troisième portion définies par des bords droits formés entre chaque point d'intersection de transition et chaque crête de filet adjacente, une crête vive étant formée au niveau de la crête de filet ayant un angle de 30 degrés (48), et la hauteur des deuxième et troisième portions du flanc de filet étant la moitié de la hauteur totale du flanc de filet.

2. Attache selon la revendication 1, dans laquelle la surface des filets, la crête de filet, la base de filet et les flancs de filet sont agencés de manière à déformer le matériau ductile sans fissurer ou endommager le matériau ductile environnant de la pièce.

3. Attache selon la revendication 2, dans laquelle les filets sont agencés de manière à déformer le matériau de la pièce contre la surface du flanc de filet.

4. Attache selon l'une quelconque des revendications précédentes, dans laquelle les deuxième et troisième portions du flanc de filet sont agencées de manière à déformer le matériau ductile de la pièce contre la surface de la portion centrale de rayon constant du flanc de filet.

5. Attache selon l'une quelconque des revendications précédentes, dans laquelle le rayon de la portion centrale du flanc de filet ayant le rayon constant définit un cercle de construction qui détermine le pas du filet.

6. Attache selon la revendication 5, dans laquelle le pas du filet est déterminé par les tangentes entre des cercles de construction adjacents partageant une crête de filet.

7. Attache selon l'une quelconque des revendications précédentes, dans laquelle le pas de filet de l'attache pousse le déplacement de matériau ductile vers la base de filet.

8. Attache selon l'une quelconque des revendications précédentes, dans laquelle le matériau de la pièce est du plastique synthétique.

9. Attache selon l'une quelconque des revendications précédentes, dans laquelle le matériau de la pièce est de la résine.

10. Attache selon l'une quelconque des revendications précédentes, dans laquelle le matériau de l'attache est de l'acier ou de l'acier inoxydable.

11. Matrice de filetage par roulage pour fabriquer une attache à filet de vis formant des filets destinée à être fixée dans un trou formé par l'attache dans une pièce composée de matériau ductile, l'attache étant l'attache selon l'une quelconque des revendications précédentes, la matrice de filetage par roulage comprenant une face de matrice ayant le même profil que la vis formant des filets.
